# EUROPEAN PATENT SPECIFICATION

(11) **EP 0 322 525 B1**
(45) Date of publication and mention of the grant of the patent: **16.03.1994**
(21) Application number: 88117152.4
(22) Date of filing: 14.10.1988
(51) Int. Cl.: H04B 7/005

(54) **Automatic transmit power level control in radio links**
Automatische Steuerung des Leistungspegels für Richtfunkverbindungen
Contrôle automatique du niveau de puissance d'émission dans des liaisons radio

(30) Priority: 23.12.1987 IT 2317687
(43) Date of publication of application: 05.07.1989
(73) Proprietor: ALCATEL ITALIA Società per Azioni, 20149 Milano (IT)
(72) Inventor: Casiraghi, Umberto, I-20046 Biassono MI (IT); Vismara, Luigi, I-20059 Vimercate MI (IT)
(74) Representative: Strehl Schübel-Hopf Groening & Partner

(56) References cited:
- EP-A- 0 230 691
- GB-A- 2 132 454
- US-A- 4 309 771

## Description

The present invention refers to an automatic power control (APC) system in signal transmissions between transmitting and receiving stations via radio link, and specifically radio links using digital modulation techniques. In particular, the present invention refers to a system to control and achieve a stability as high as possible of cross polar discrimination, in order to allow for the transmission of two digitally modulated signals, for example multilevel QAM modulated signals, at the same carrier frequency, in systems formed of, for example, up to 11+1 RF channels, with frequency reuse.

The present invention also includes the circuits for the inplementation of the subject system.

The automatic power control in radio transmission is described in the literature. Specifically, US-A-4 004 224 describes a method wherein the operation of all transmitters in a link takes place, during no-fading periods, with a power level lower than that normally used in the periods during which there is fading. In the system according to the present invention, the power variation is now advantageously calculated with the purpose of providing a sufficient operating margin in the power control with respect to possible degradations of XPD (cross polar discrimination).

The system object of the present invention is effective when using RF frequency plans with frequency reuse, taking advantage of cross polar discrimination.

In high capacity digital systems, the system according to the present invention protects the radio channel from cross-polar interference at the same frequency, and from co-polar interference from the adjacent RF channels.

The same system is also effective in special cases of very heavy atmospheric precipitations resulting in a major reduction of the mean value of cross polar discrimination.

In this case advantage is taken of a quality control made in the RF channels through the measurement of the bit error rate (BER) in reception, then a statistical coefficient is applied to this control and it is used to locally control the power levels of all transmitters used to double the exploitation of the RF frequency band assigned. This local control is operating only in the case of very heavy precipitations that may occur at particular latitudes, for example in tropical countries and next to coastal zones.

Whenever the local control is activated, the number of radio channels is halved for each direction of transmission.

Each transmitter-associated remote receiver set requires a power control device, comprised of a circuit that detects the power level received by the main receiver and the receivers that affect the stabilization of the interference levels.

These receivers are basically the receivers for the cross-polar channel and the two co-polar channels operating on the two adjacent frequencies.

A comparator compares the signals corresponding with the levels of the four receivers and generates a reference signal for controlling the remote transmitter; a modulator inserts this control signal in the high frequency transmission system used to carry the information signals. Obvioulsy, the APC device also includes a demodulator that demodulates the control signal which drives a power amplifier gain regulator circuit.

The purpose of the present invention is to provide an automatic power control (APC) particularly effective with respect to cross polar discrimination and adjacent channel interferences in radio transmissions using multilevel QAM modulation.

A further object of the invention is to provide an APC for radio link systems comprised of several RF channels (multiline systems), using digital service channel equipment, preferably multiplex and digital drop/insert devices, for transmitting the control signals necessary to control said RF channels.

These and other objects are achieved using a control in accordance with the present invention, comprised of:
- means to derive a first control signal for each RF channel in each receiver, and a second control signal for the adjacent channels,
- means to combine the said 1st and 2nd control signals to derive threshold signals,
- means to multiplex all of the threshold signals of the individual receivers,
- means to insert a station identification signal in said multiplexer,
- means to further multiplex said multiplexed signal with other service signals,
- means to insert this twice multiplexed signal in the frame of the main information signal transmitted in the other direction of transmission,
- means to receive and twice demultiplex the received signal,
- means to process this demultiplexed signal so as to derive, on one hand, a transmit power level remote control signal, called signal Nr. 1, protected from possible faults or malfunctions in the main digital channel and, on the other hand, the station identification signal,
- means to evaluate exceptional atmospheric precipitation conditions (rain, snow, hail, etc.) through a statistical control of the bit error rate made on the receivers installed in the same station as the transmitters whose transmit power level is controlled,
- means to simultaneously derive a transmit power level local control signal, called signal Nr. 2, in the same station where the receivers whose bit error rate information is processed are installed,
- means to apply the said control signals to the pre-distortion circuits that are part of the power amplifiers of the transmitters.

Other characteristics of the present invention are specified in the sub-claims.

Accordingly, the pre-distortion circuit preferably has a corrective effect on the distortion of the RF transmit amplifier only during the periods of time when the transmit power level is maximum, and the pre-distortion circuit preferably keeps the conventional automatic transmit power control circuit operating during the periods of time when the APC control is not operating, and maintains the previously acquired situation during the periods of time when the APC control is operating.

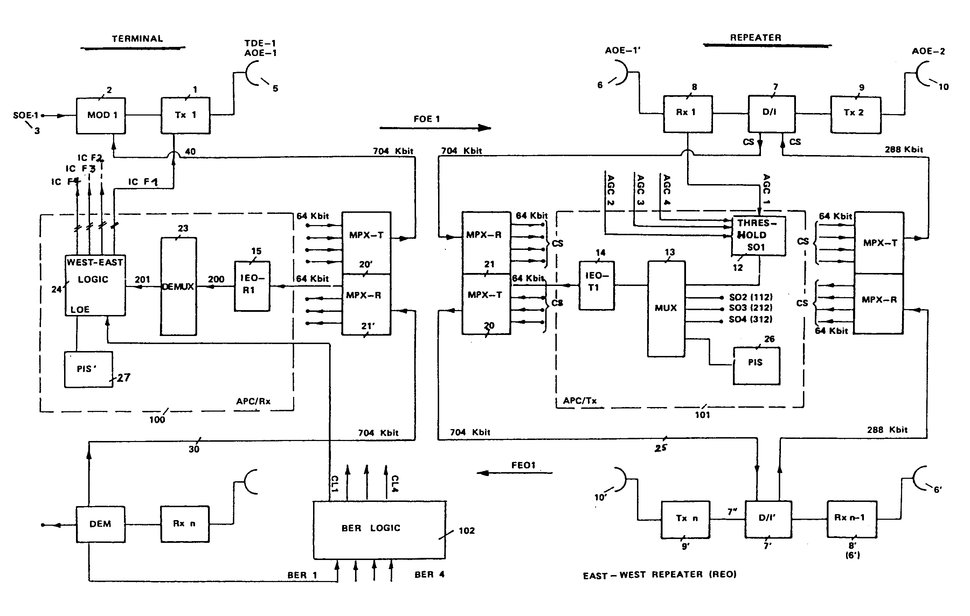

The various features and advantages of the present invention will be better understood through the preferred embodiments illustrated in the attached block diagram (fig. 1).

Fig. 1 is a functional block diagram of the system in accordance with the present invention, applied, as an example, to the transmission-reception of four RF channels in the west to east direction, and four radio channels in the east to west direction, with reuse of the RF frequencies in a cross-polarized configuration.

For sake of simplicity, fig. 1 shows only one terminal (TDE.1), and specifically that from west to east, comprised of a modulator (MOD.1) which modulates the information signal to transmit SOE.1 (3); the true transmitter TX1 (1), and the respective antenna AOE-1 (5). The repeater receiver (6) conventionally includes the correspondig receiver RX1 (8) connected with antenna AOE-1' followed by the service channel (CS) drop/insert (D/I) circuit (7), and by transmitter TX2 (9) connected with antenna AOE-2 (10) that is part of the subsequent radio hop.

According to a feature of the present invention, a threshold circuit SO1 (12) is associated with each of receivers RX1 (8) (the remaining ones RX2, RX3 and RX4 are not shown). This threshold circuit SO1 uses the following signals: AGC1, received field strength indicator signal coming from its own receiver; AGC2, AGC3 received field strength indicator signals coming from the co-polar adjacent receivers; AGC4, received field strength indicator signal coming from the co-channel receiver operating on the same frequency. The threshold circuit processes the mentioned signals and outputs a digital signal to an information multiplexer MUX (13) which also receives the remaining threshold signals SO2 (112), SO3 (212) and SO4 (312) and generates a frame, for example at a bit rate of 64 Kbit/s, carrying the information from the threshold circuits to be sent back in the west direction, through an appropriate east-west interface circuit IEO-T1 (14), for example of the standard G.703 contradirectional type.

According to the invention, the signal output from interface IEO-T1 (14) (at a bit rate of 64 Kbit/s) is subsequently fed to transmit section MPX-T (20) of a service multiplexer, wherein it is multiplexed together with other (for example, three) similar signals at 64 Kbit/s; the service multiplexers outputs, on line 25, a signal at, for example, 704 Kbit/s that is fed to drop/insert equipment D/I' (7') of the east-west repeater, REO (6'), who feeds signal 7'' to transmitter TXn (9') who feeds it to antenna 10'. The signal radiated by the antenna reaches receiver RXn, where it is demodulated in the DEM block, and is fed, through line 30, to demultiplexer MPX-R (receive side) (21'). MPX-R outputs the various signals at 64 Kbit/s, one of which is fed to interface IEO-R1 (15), the output signal (200) of which is demultiplexed and paralleled in DEMUX (23). The output signal 201 is, according to the invention, processed in the O-E logic (LOE-24) that performs a number of critical functions:
1) extracts the station identification word PIS inserted in 26 and compares it to a word PIS' generated locally in 27;
2) extracts the information necessary to control the transmit powers of the individual RF channels ICF1, ICF2, ICF3, ICF4 (in the case considered in the figure, which shows only four channels). The control signal, for example ICF1, is typically applied to transmitter TX1 (1) through line 40;
3) performs filtering and alarm management functions on the received signals, so as to protect the APC system from faults and malfunctions of the digital channel used to transmit the APC information;
4) manages the local and remote manual control operations;
5) Logic (LOE-24) also receives a CL1 signal coming from the BER logic (102) relevant to the local transmit power control in the case of very heavy atmospheric precipitations.
   BER logic (102) receives the alarm signals from all receivers (DEM) installed in the west stations, which use the same cross-polar frequencies (as, for example, for the case of an expansion of the pre-existing transmission capacity), statistically processes these signals and derives the simultaneous control signals (CL1 - CL4) that are sent to the respective APC/RX logics for the above mentioned local transmit power control.

Among the most significant features and advantages of the invention, we mention the following ones:
1) The power control is implemented inside a pre-distortion circuit associated with the transmitter, so as to activate it during the percentages of time when power is increased and to deactivate it when the system operates at the reduced nominal power level; this solution is such that the microwave power amplifiers operate under high linearity conditions for almost all the time, which is a requirement for the aforementioned multilevel QAM systems, without loosing the corrective effect of the pre-distortion circuit during the small period of time during which the power level is the maximum one.
2) The regulation of the transmit power level takes place continuously. The nominal power level (i.e. the attenuation with respect to the max. transmitter power level) and the APC circuit operating threshold are fixed. The APC circuit operating threshold gradually increases or decreases the transmit power level, within the operating range of the driver, according to the information resulting from the analysis made on the receivers for cross polar discrimination.
3) The proposed APC system is applicable to high capacity digital radio links using multilevel QAM modulation systems and its embodiment according to the invention is very well suitable for expanding the system configurations up to 2 x (11+1) RF channels with frequency reuse in cross-polar configuration.
4) A station identification system has been introduced to prevent the risk of receiving an APC control signal coming from a different station in the case of the operation of a protection circuit, for example because of a drop/insert circuit by-passed in a repeater station.
5) The system takes full advantage of control message convalidation techniques, whereby the transmit power level is frozen at the nominal level in the case of faults or malfunctions in the channel used to transmit the information.
6) The system includes a manual maintenance control providing facilities for local and remote controlled operations.
7) The system characteristics of the proposed solution and their implementing modes make possible an easy expansion of the power control to system configurations comprised of several RF channels, up to max. 2 x (11 + 1).
8) It is also highligthed that the automatic transmit power level control in accordance with the present invention does not affect at all the pre-existing local transmit power control, which counteracts variations in the environmental operating conditions and components aging.

## Claims

1. A transmit power control system for multiline radio links using microwave signal digital modulation, specifically multilevel QAM modulation, in each RF transmitter (1, 5) which receives from a respective receiver (6, 8) associated therewith and from interfering receivers signals indicating the level of useful signals received on that RF channel and sends them back to the associated transmitter in order to regulate the transmit power level, **characterized** by
- means for deriving a first control signal (AGC1) for each RF channel in each receiver (8) and a second control signal (AGC2 ... AGC4) for the adjacent channels,
- means (SO1 (12)) for combining said first and second control signals to derive threshold signals,
- means (MUX (13)) for multiplexing all of the threshold signals of the individual receivers,
- means (PIS (26)) for inserting a station identification signal in said multiplexer,
- means (MPX-T (20)) for further multiplexing said multiplexed signal with other service signals,
- means (D/I' (7')) for inserting this twice multiplexed signal in the frame of the main information signal transmitted in the other direction of transmission,
- means (RXn, MPX-R (21'), DEMUX (23)) for receiving and twice demultiplexing the received signal,
- means (LOE (24)) for processing this demultiplexed signal so as to derive, on one hand, a transmit power level remote control signal, called signal No. 1, protected from possible faults or malfunctions in the main digital channel and, on the other hand, the station identification signal,
- means (BER (102)) for evaluating exceptional atmospheric precipitation conditions (rain, snow, hail, etc.) through a statistical control of the bit error rate made on the receivers installed in the same station as the transmitters which transmit power level is controlled,
- means for simultaneously deriving a transmit power level local control signal, called signal No. 2, in the same station where the receivers whose bit error rate information is processed are installed,
- means for applying said control signals to the pre-distortion circuits that are part of the power amplifiers of the transmitters.

2. The control system of claim 1, further comprising means for performing said power control manually.

3. The control system of claim 1, wherein the pre-distortion circuit includes means for correcting the distortion of the RF transmit amplifier only during the periods of time when the transmit power level is maximum.

4. The control system of claim 1, wherein the pre-distortion circuit includes means for keeping the conventional automatic transmit power control circuit operating during the periods of time when the power control is inoperative, and to maintain the previously acquired situation during the periods of time when the power control operates.

5. Use of the control system of any of the preceding claims for a radio link having multilevel QAM modulation in configurations of up to 2 x (11 + 1) RF channels with frequency reuse.

## Patentansprüche

1. Sendeleistungssteuerungsystem für Mehrfach-Funkverbindungen unter Verwendung von digitaler Mikrowellensignalmodulation, insbesondere der Multipegel-QAM-Modulation, in jedem Hochfrequenzsender (1, 5), der von einem entsprechenden zugehörigen Empfänger (6, 8) und von störenden Empfängern Signale erhält, die den Pegel von nutzbaren Signalen anzeigen, die auf dem Hochfrequenzkanal erhalten werden, wobei diese zu dem zugehörigen Sender zurückgesendet werden, um den Sendeleistungspegel zu regulieren, **gekennzeichnet** durch
- eine Einrichtung zum Ableiten eines ersten Steuersignales (AGC1) für jeden Hochfrequenzkanal in jedem Empfänger (8) und eines zweiten Steuersignales (AGC2 ... AGC4) für die benachbarten Kanäle,
- eine Einrichtung (SO1 (12)) zum Verbinden des ersten und des zweiten Steuersignales zum Ableiten von Schwellenwertsignalen,
- eine Einrichtung (MUX (13)) zum Multiplexen aller Schwellenwertsignale der einzelnen Empfänger,
- eine Einrichtung (PIS (26)) zum Einfügen eines Stations-Identifikationssignales im Multiplexer,
- eine Einrichtung (MPX-T (20)), um das gemultiplexte Signal mit anderen Betriebssignalen zu multiplexen,
- eine Einrichtung (D/I' (7')) zum Einfügen dieses zweimal gemultiplexten Signals in den Datenübertragungsblock des Haupt-Informationssignales, das in der anderen Übertragungsrichtung übertragen wird,
- eine Einrichtung (RXn, MPX-R (21'), DEMUX (23)) zum Empfangen und zweimal demultiplexen des erhaltenen Signals,
- eine Einrichtung (LOE (24)) zum Verarbeiten dieses demultiplexten Signals, um einerseits ein Sendeleistungspegelfernsteuersignal, das Signal Nr. 1 genannt wird und das vor möglichen Störungen oder Fehlfunktionen im digitalen Hauptkanal bewahrt, und andererseits das Stations-Identifikationssignal abzuleiten,
- eine Einrichtung (BER (102)) zum Bewerten von außergewöhnlichen atmosphärischen Niederschlagsbedingungen (Regen, Schnee, Hagel etc.) durch eine statistische Überprüfung der Bitfehlerrate in den Empfängern, die sich in der gleichen Station befinden wie die Sender, deren Sendeleistungspegel gesteuert wird,
- eine Einrichtung zum gleichzeitigen Ableiten eines lokalen Sendeleistungspegelsteuersignals, das Signal Nr. 2 genannt wird, in der gleichen Station, in der sich die Empfänger befinden, deren Bitfehlerrateninformation verarbeitet wird, und
- eine Einrichtung zum Anlegen der genannten Steuersignale an die Vorverzerrungsschaltungen, die Teil der Leistungsverstärker der Sender sind.

2. Steuerungssystem nach Anspruch 1, mit einer Einrichtung zum manuellen Ausführen der Leistungssteuerung.

3. Steuerungssystem nach Anspruch 1, wobei die Vorverzerrungsschaltung eine Einrichtung zum Korrigieren der Verzerrung des Hochfrequenzsendeverstärkers nur während der Zeitperioden aufweist, während der der Sendeleistungspegel maximal ist.

4. Steuerungssystem nach Anspruch 1, wobei die Vorverzerrungsschaltung eine Einrichtung zum Aufrechterhalten des Betriebs der herkömmlichen automatischen Sendeleistungssteuerschaltung während der Zeitperioden aufweist, während der die Leistungssteuerung nicht in Betrieb ist, und um den vorher eingenommenen Zustand während der Zeitperioden aufrechtzuerhalten, während der die Leistungssteuerung in Betrieb ist.

5. Verwendung des Steuerungssystems eines der vorstehenden Ansprüche bei einer Funkverbindung mit einer Multipegel-QAM-Modulation in Konfigurationen mit bis zu 2 x (11 + 1) Hochfrequenzkanälen und Frequenz-Wiederverwendung.

## Revendications

1. Système de commande de puissance d'émission pour liaisons radio multi-lignes, utilisant une modulation numérique de signaux hyperfréquence, specifiquement une modulation d'amplitude en quadrature de phase multiniveau, dans chaque émetteur RF (1, 5) qui reçoit d'un récepteur respectif (6, 8) coopérant avec lui et de récepteurs brouilleurs des signaux indiquant le niveau de signaux utiles reçus sur ce canal RF et qui les renvoie à l'émetteur correspondant afin de réguler le niveau de puissance d'émission, **caractérisé** par
- un moyen pour obtenir un premier signal de commande (AGC1) pour chaque canal RF de chaque récepteur (8) et un second signal de commande (AGC2... AGC4) pour les canaux voisins,
- un moyen (SO1 (12)) pour combiner lesdits premiers et seconds signaux de commande pour obtenir des signaux de seuils,
- un moyen (MUX (13)) pour multiplexer tous les signaux de seuils des différents récepteurs,
- un moyen (PIS (26)) pour introduire dans ledit multiplexeur un signal d'identification de station,
- un moyen (MPX-T (20)) pour multiplexer en outre ledit signal multiplexé avec d'autres signaux de service,
- un moyen (D/I' (7')) pour introduire ce signal deux fois multiplexé dans le cadre du signal d'informations principal émis dans l'autre direction d'émission,
- des moyens (RXn, MPX-R (21'), DEMUX (23)) pour recevoir et pour démultiplexer deux fois le signal reçu,
- un moyen (LOE (24)) pour traiter ce signal démultiplexé de façon à obtenir, d'une part, un signal de commande à distance de niveau de puissance d'émission, appelé signal n° 1, protégé vis-à-vis de défauts ou de dysfonctionnements possibles dans le canal numérique d'émission principal et, d'autre part, le signal d'identification de station,
- un moyen (BER (102)) pour évaluer des conditions exceptionnelles de précipitations atmosphériques (pluie, neige, grêle) par l'intermédiaire d'un contrôle statistique du taux d'erreurs sur les bits effectué sur les récepteurs installés dans la même station que les émetteurs dont le niveau de puissance d'émission est commandé,
- un moyen pour obtenir simultanément un signal de commande locale de niveau de puissance d'émission, appelé signal n° 2, dans la station où sont installés les récepteurs sont les informations relatives au taux d'erreurs sur les bits sont traitées,
- un moyen pour appliquer lesdits signaux de commande aux circuits de prédistorsion qui font partie des amplificateurs de puissance des émetteurs.

2. Système de commande selon la revendication 1, comportant en outre un moyen pour effectuer manuellement ladite commande de puissance.

3. Système de commande selon la revendication 1, dans lequel le circuit de prédistorsion comporte un moyen pour corriger la distorsion de l'amplificateur d'émission RF seulement pendant les périodes de temps où le niveau de puissance d'émission est maximal.

4. Système de commande selon la revendication 1, dans lequel le circuit de prédistorsion comporte un moyen pour maintenir en fonctionnement le circuit de commande automatique de puissance d'émission selon la technique antérieur pendant les périodes où la commande de puissance est neutralisée, et pour conserver la situation préalablement acquise pendant les périodes où fonctionne la commande de puissance.

5. Utilisation du système de commande selon l'une quelconque des revendications précédentes pour une liaison radio ayant une modulation d'amplitude en quadrature de phase multiniveau dans des configurations comportant un maximum de 2 x (11 + 1) canaux RF avec réutilisation de fréquence.
